# EUROPEAN PATENT APPLICATION

(11) **EP 4 844 587 A1**
(43) Date of publication of application: **25.11.2026**
(21) Application number: 24923285.1
(22) Date of filing: 02.09.2024
(51) Int. Cl.: G06F 11/14

(54) **FILE SYSTEM, OPERATING SYSTEM, AND COMPUTING DEVICE**

(30) Priority: 07.02.2024 CN 202410175776
(71) Applicant: Huawei Technologies Co., Ltd., Shenzhen, Guangdong 518129 (CN)
(72) Inventor: HU, Wanming, Shenzhen, Guangdong 518129 (CN); WANG, Xu, Shenzhen, Guangdong 518129 (CN); REN, Yuxin, Shenzhen, Guangdong 518129 (CN); ZHENG, Songlin, Shenzhen, Guangdong 518129 (CN); MA, Haodong, Shenzhen, Guangdong 518129 (CN); CHENG, Liang, Shenzhen, Guangdong 518129 (CN); LIN, Zichang, Shenzhen, Guangdong 518129 (CN); XU, Bo, Shenzhen, Guangdong 518129 (CN); SHAO, Xianbiao, Shenzhen, Guangdong 518129 (CN)
(74) Representative: Huawei European IPR
(86) International application number: PCT/CN2024/116211
(87) International publication number: WO 2025/167075

(57) **Abstract**

A file system includes: multiple first file systems, where the multiple first file systems are mounted to different partitions of a same storage medium or mounted to different storage media; and a second file system, mounted to the multiple first file systems, and configured to perform, among the multiple first file systems, fault tolerance check on consistent data in memory metadata of the multiple first file systems. In this way, the second file system is overlaid on the existing first file system, so that fault tolerance check can be performed among the first file systems on the consistent data in the memory metadata of the first file system, and there is no need to perform redundancy backup on the consistent data in the first file system, thereby reducing memory overheads and implementing memory fault coverage with low memory overheads.

## Description

This application claims priority to Chinese Patent Application No. 202410175776.0, filed with the China National Intellectual Property Administration on February 7, 2024 and entitled "FILE SYSTEM, OPERATING SYSTEM, AND COMPUTE DEVICE", which is incorporated herein by reference in its entirety.

### TECHNICAL FIELD

This application relates to the information technology (information technology, IT) field, and in particular, to a file system, an operating system, and a compute device.

### BACKGROUND

In a computer operating system (operating system, OS), a software mechanism that is responsible for managing and storing file data may be referred to as a file system. The file system defines a structure of file data and directories and provides interfaces for accessing, modifying, and managing the file data. Reliability of the file system directly affects reliability of the OS, and reliability of the OS directly affects reliability of a device configured with the OS. Currently, to improve reliability of a file system, fault tolerance is usually performed on stored file data, to resolve a problem that a file system is faulty due to a storage fault. Although this manner can improve reliability of the file system to some extent, it lacks a fault tolerance capability for metadata of the file system that exists in a memory managed by the OS. Therefore, when a fault occurs in the metadata of the file system stored in the memory, severe impact such as unavailability of the file system and loss of files/directories are caused.

### SUMMARY

This application provides a file system, an operating system, a memory management method, a memory management apparatus, a compute device, a computer storage medium, and a computer product, to cover a memory fault with low memory overheads, thereby improving reliability of the file system.

According to a first aspect, this application provides a file system, including: multiple first file systems, where the multiple first file systems are mounted to different partitions of a same storage medium or mounted to different storage media; and a second file system, mounted to the multiple first file systems, and configured to perform, among the multiple first file systems, fault tolerance check on consistent data in memory metadata of the multiple first file systems.

In this way, the second file system is overlaid on the existing first file system, so that fault tolerance check can be performed among the first file systems on the consistent data in the memory metadata of the first file system, and there is no need to perform redundancy backup on the consistent data in the first file system, thereby reducing memory overheads and implementing memory fault coverage with low memory overheads.

In a possible implementation, the second file system is further configured to perform fault tolerance check on file data of the multiple first file systems. In this way, both a memory fault and a storage fault can be covered with low memory overheads, thereby improving reliability of the file system.

In a possible implementation, the second file system is further configured to separately perform, in each of the first file systems, fault tolerance check on inconsistent data in the memory metadata of the multiple first file systems. In this way, fault tolerance check can be performed on all data in the memory metadata, thereby further improving reliability of the file system.

In a possible implementation, the file system further includes a virtual file system, and the virtual file system is mounted to the second file system.

In a possible implementation, one copy of consistent data in memory metadata of one of the first file systems is stored in a memory; and multiple copies of inconsistent data in memory metadata of one of the first file systems are stored in the memory. In this way, there is no need to perform redundancy backup on all data in the memory metadata of the first file system, thereby reducing memory overheads.

In a possible implementation, one copy of consistent data in memory metadata of one of the first file systems is stored in the memory; and one copy of inconsistent data in memory metadata of one of the first file systems is stored in the memory, and an erasure code is added to each copy of inconsistent data. In this way, there is no need to perform redundancy backup on the memory metadata of the first file system, thereby reducing memory overheads.

In a possible implementation, one copy of consistent data in memory metadata of one of the first file systems is stored in the memory; and one copy of first sub-data included in inconsistent data in memory metadata of one of the first file systems is stored in the memory, an erasure code is added to the first sub-data, and multiple copies of second sub-data included in the inconsistent data are stored in the memory. In this way, there is no need to perform redundancy backup on all data in the memory metadata of the first file system, thereby reducing memory overheads.

In a possible implementation, the consistent data in the memory metadata includes one or more of a file name, an access permission, and a group identifier; and the inconsistent data in the memory metadata includes a timestamp and/or a superblock pointer.

In a possible implementation, a mounting relationship between the first file system and the second file system is specified by a user. In this way, mounting flexibility is improved, and user experience is improved.

In a possible implementation, a quantity of the first file systems is specified by the user. In this way, mounting flexibility is improved, and user experience is improved.

In a possible implementation, both consistent data and inconsistent data in the memory metadata of the first file system are specified by the user. In this way, flexibility of memory metadata redundancy backup is improved, and user experience is improved.

In a possible implementation, the second file system is further configured to: determine, based on a file attribute and/or an operation type included in a read/write request, multi-modular information of a target file to which the read/write request is directed, where the multi-modular information indicates a quantity of backups and a backup file location of the target file; and when the multi-modular information indicates that there are multiple backups of the target file, initiate a read/write operation to a first file system to which each backup file location belongs; or when the multi-modular information indicates that there is a single backup of the target file, initiate a read/write operation to a first file system to which the backup file location belongs. In this way, the data read/write operation is completed.

In a possible implementation, the file attribute includes one or more of a user identifier, a group identifier, a process identifier, a file name, and a file type.

According to a second aspect, this application provides an operating system. The file system described in any one of the first aspect or the possible implementations of the first aspect may be mounted to the operating system.

According to a third aspect, this application provides a compute device, including a memory, a processor, and a computer program that is stored in the memory and that can be run on the processor, where the file system described in any one of the first aspect or the possible implementations of the first aspect is deployed on the processor, and when executing the computer program, the processor implements running of the file system.

According to a fourth aspect, this application provides a memory management method, applied to an operating system to which multiple file systems are mounted, where the multiple file systems are mounted to different partitions of a same storage medium or mounted to different storage media. The method includes: separately reading metadata of each of the file systems from the storage media or partitions to which the multiple file systems are mounted; storing one copy of first sub-data in the metadata of each of the file systems in a memory, where the first sub-data is consistent data in metadata of the multiple file systems; and storing multiple copies of second sub-data in the metadata of each of the file systems in the memory, and/or adding an erasure code to the second sub-data and storing the second sub-data in the memory, where the second sub-data is inconsistent data in the metadata of the multiple file systems.

In a possible implementation, the method further includes: in response to an obtained file read operation, separately reading a target file from at least two file systems in the multiple file systems, and separately reading metadata of the at least two file systems from the memory; performing fault tolerance check on the read target file in a consistency arbitration manner; and performing fault tolerance check on the read first sub-data in a consistency arbitration manner, and performing, for any file system in the multiple file systems, fault tolerance check on the read second sub-data of the any file system in a consistency arbitration manner or an erasure code fault detection manner.

In a possible implementation, the first sub-data includes one or more of a file name, an access permission, and a group identifier; and the second sub-data includes a timestamp and/or a superblock pointer.

According to a fifth aspect, this application provides a memory management apparatus, deployed in an operating system to which multiple file systems are mounted, where the multiple file systems are mounted to different partitions of a same storage medium or mounted to different storage media. The apparatus includes: a reading module, configured to read metadata of each of the file systems from the storage media or partitions to which the multiple file systems are mounted; and a processing module, configured to store one copy of first sub-data in the metadata of each of the file systems in a memory, where the first sub-data is consistent data in metadata of the multiple file systems. The processing module is further configured to store multiple copies of second sub-data in the metadata of each of the file systems in the memory, and/or add an erasure code to the second sub-data and store the second sub-data in the memory, where the second sub-data is inconsistent data in the metadata of the multiple file systems.

In a possible implementation, the reading module is further configured to: in response to an obtained file read operation, separately read a target file from at least two file systems in the multiple file systems, and separately read metadata of the at least two file systems from the memory; and the processing module is further configured to perform fault tolerance check on the read target file in a consistency arbitration manner; and perform fault tolerance check on the read first sub-data in a consistency arbitration manner, and perform, for any file system in the multiple file systems, fault tolerance check on the read second sub-data of the any file system in a consistency arbitration manner or an erasure code fault detection manner.

In a possible implementation, the first sub-data includes one or more of a file name, an access permission, and a group identifier; and the second sub-data includes a timestamp and/or a superblock pointer.

According to a sixth aspect, this application provides a compute device, including: one or more processors; a memory, configured to store one or more programs; and when the one or more programs are executed by the one or more processors, the one or more processors are enabled to implement the method described in any one of the fourth aspect or the possible implementations of the fourth aspect.

According to a seventh aspect, this application provides a computer-readable storage medium, including computer program instructions. When the computer program instructions are executed by a compute device cluster, the compute device cluster is enabled to perform the method described in any one of the fourth aspect or the possible implementations of the fourth aspect. For example, the compute device cluster may include one or more compute devices.

According to an eighth aspect, this application provides a computer program product including instructions. When the instructions are run by a compute device cluster, the compute device cluster is enabled to perform the method described in any one of the fourth aspect or the possible implementations of the fourth aspect. For example, the compute device cluster may include one or more compute devices.

It can be understood that, for beneficial effects of the second aspect to the eighth aspect, refer to related descriptions in the first aspect. Details are not described herein again.

### BRIEF DESCRIPTION OF DRAWINGS

FIG. 1A and FIG. 1B are diagrams of a running environment of an OS according to an embodiment of this application;
FIG. 2A to FIG. 2C are diagrams of data in different partitions and metadata of the data in a memory according to an embodiment of this application;
FIG. 3 is a diagram of a data writing process according to an embodiment of this application;
FIG. 4A and FIG. 4B are a diagram of a data reading process according to an embodiment of this application;
FIG. 5 is a schematic flowchart of a memory management method according to an embodiment of this application; and
FIG. 6 is a diagram of a structure of a memory management apparatus according to an embodiment of this application.

### DESCRIPTION OF EMBODIMENTS

The term "and/or" in this specification describes an association relationship between associated objects and represents that three relationships may exist. For example, A and/or B may represent the following three cases: Only A exists, both A and B exist, and only B exists. The character "/" in this specification indicates an "or" relationship between the associated objects. For example, A/B indicates A or B.

In the specification and claims of this application, the terms "first", "second", and the like are intended to distinguish between different objects, but do not indicate a particular order of the objects. For example, a first response message, a second response message, and the like are intended to distinguish between different response messages, but do not indicate a particular order of the response messages.

In embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. To be precise, use of the words such as "example" or "for example" is intended to present a relative concept in a specific manner.

In descriptions of embodiments of this application, unless otherwise specified, "multiple" means two or more. For example, multiple processing units mean two or more processing units, and multiple elements mean two or more elements.

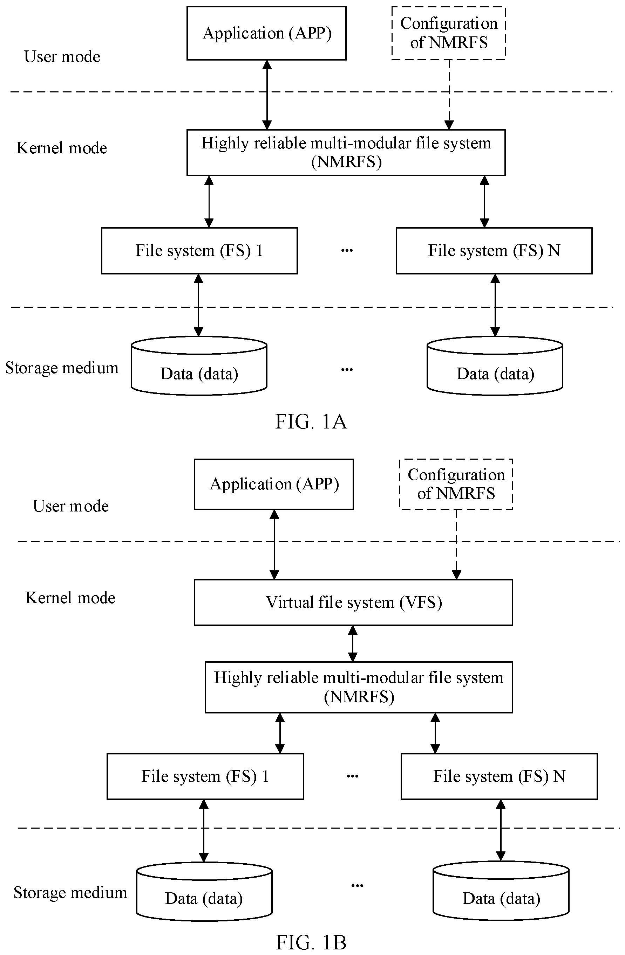

For example, FIG. 1A and FIG. 1B are a diagram of a running environment of an OS according to an embodiment of this application. As shown in FIG. 1A, the running environment of the OS includes an application (application, APP), multiple file systems (file system, FS), a highly reliable multi-modular file system (N modular redundancy file system, NMRFS), and a storage medium (such as a hard disk, a partition, or a network storage). In a running process of the OS, multiple FSs may be mounted to different storage media /or different partitions of a same storage medium, and the NMRFS may be mounted to the multiple FSs. A quantity of FSs that have a mounting relationship with the NMRFS may be but is not limited to being specified by a user. For example, the user can specify the quantity of FSs in a form of a configuration file or a command line. In addition, both mounting the FS to the storage medium and mounting the NMRFS to the multiple FSs may be implemented in automatic mounting or manual mounting mode. For example, in a Linux system, the user can use a mount command "mount -t yaffs /dev/mtdblock1 /tmp/yaffs1" to mount a file system yaffs1 to a partition mtdblock1, and use a mount command "mount -t yaffs /dev/mtdblock2 /tmp/yaffs2" to mount a file system yaffs2 to a partition mtdblock2. Then, the user can use a mount command "mount -t nmrfs -o dir1=/tmp/yaffs1,dir2=/tmp/yaffs2 none /tmp/ nmrfs" to mount the NMRFS to the two file systems yaffs1 and yaffs2. After the NMRFS is mounted, a subsequent read/write operation needs to be performed only on /tmp/nmrfs, and the NMRFS automatically distributes the read/write operation to /tmp/yaffs1 and /tmp/yaffs2. When data in a file a.txt needs to be read, a file path in a read request may be /tmp/nmrfs/a.txt. Then, the NMRFS separately forwards the request for reading the file a.txt to yaffs1 and yaffs2. Optionally, as shown in FIG. 1B, the running environment of the OS may further include a virtual file system (virtual file system, VFS). The VFS may be in a kernel mode, and is located between the APP and the NMRFS, that is, the APP communicates with the NMRFS via the VFS. The VFS can be mounted to the NMRFS. In some embodiments, the multiple FSs and the NMRFS may form a new FS, and the new FS may be mounted to the OS. Certainly, the multiple FSs, the NMRFS, and the VFS may also form a new FS, and the FS may also be mounted to the OS.

In this embodiment, the APP is a set of a series of instructions and code written by the user or another software entity, and may execute a specific task, provide a specific function, or resolve a specific problem. For example, the APP may initiate a read/write request to the NMRFS. The read/write request may include a file path.

The FS is mainly used to organize and manage files in a computer. The FS provides functions such as creating files and directories, reading and writing files, deleting files and directories, searching for files, and protecting files. For example, the FS may be yet another flash file system (yet another flash file system, YAFFS), an internet flash file system (internet flash file system, IFFS), a hybrid flash file system (hybrid flash file system, HFFS), or a temporary file system (temporary file system, TMPFS).

The NMRFS may be configured to determine, after the APP initiates a read/write request, multi-modular information of a file to which the read/write request is directed. The multi-modular information indicates a quantity of backups and a backup file location of the file. After determining the multi-modular information of the file to which the read/write request is directed, the NMRFS may initiate a read/write operation to at least one FS based on the determined multi-modular information. When the multi-modular information indicates that there is a single backup of the file, the NMRFS may initiate a read/write operation to one FS. When the multi-modular information indicates that there are multiple backups of the file, the NMRFS may initiate a read/write operation to multiple FSs. In some embodiments, the user may specify data that needs redundancy backup. The user can specify, in a form of a configuration file or a command line, the data that needs the redundancy backup. For example, the user can specify that the redundancy backup is performed on all data processed by a specific process, or specify that the redundancy backup is performed on all data in a specific file. In addition, a quantity of redundancy backups of data can be specified by the user.

In addition, the NMRFS may be further configured to perform fault tolerance check (for example, consistency arbitration) on file data in the multiple FSs. The NMRFS may also be configured to perform, among the FSs, fault tolerance check (for example, consistency arbitration) on consistent data in memory metadata of the multiple FSs. The NMRFS may also be configured to separately perform, in each FS, fault tolerance check (for example, consistency arbitration or erasure code fault detection) on inconsistent data in the memory metadata of the multiple FSs. In addition, the NMRFS may be further configured to perform fault tolerance check on two or three of the file data in the multiple FSs, the consistent data in the memory metadata of the multiple FSs, and the inconsistent data in the memory metadata of the multiple FSs. In this way, fault tolerance is implemented for the file data and/or the memory metadata of the FS, thereby covering a memory fault and a storage fault. In a manner of performing, among the FSs, fault tolerance check on the consistent data in the memory metadata of the multiple FSs, only one copy of the consistent data in the memory metadata of each FS needs to be stored in the memory. In this way, memory overheads can be reduced. In addition, an erasure code may be added to the inconsistent data in the memory metadata of the FS. Because the erasure code occupies small space, when the erasure code is used to perform fault detection in the FS on the inconsistent data in the memory metadata of the FS, memory overheads can also be reduced. However, when fault detection is performed in the FS on the inconsistent data in the memory metadata of the FS in a consistency arbitration manner, for each FS, multiple copies of inconsistent data in the memory metadata of the FS may be stored in the memory. Compared with the erasure code fault detection manner, this manner consumes high memory overheads. However, for each FS, only one copy of consistent data in the memory metadata of the FS needs to be stored in the memory. Therefore, compared with a manner in which all memory metadata is stored in multiple copies, the fault tolerance check manner in this embodiment can also reduce memory overheads. For example, the consistent data in the memory metadata of the multiple FSs may include one or more of a file name, an access permission, a group identifier (identity, ID), and the like in the metadata. The inconsistent data in the memory metadata of the multiple FSs may include a timestamp and/or a superblock (superblock) pointer, and the like. In some embodiments, the user may also specify, in a form of a configuration file or a command line, sub-data that is included in the memory metadata and that needs to enter the fault tolerance check.

For ease of understanding, the following uses examples for description.

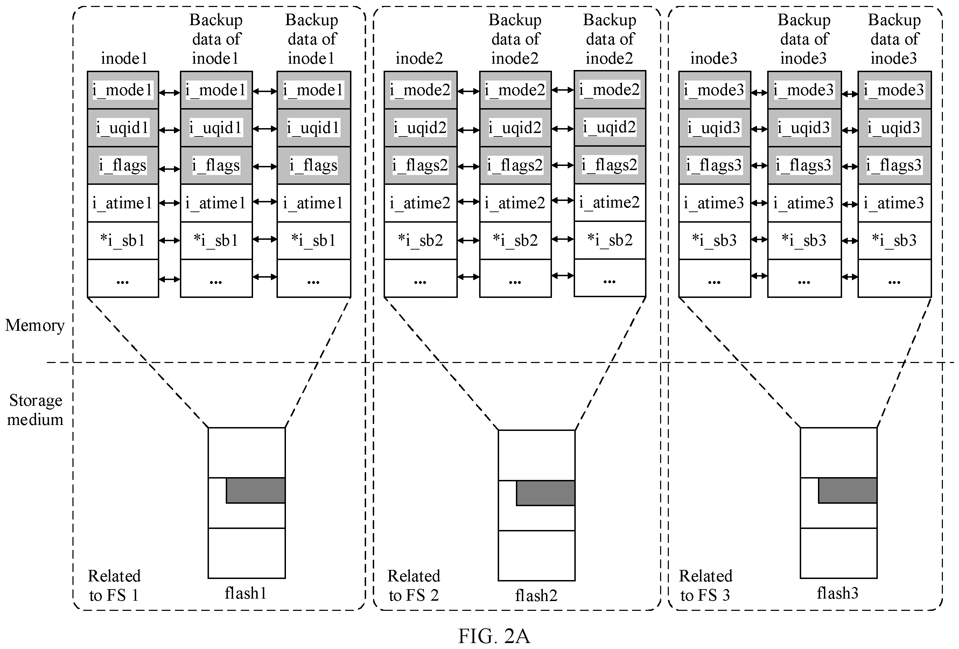

For example, as shown in FIG. 2A to FIG. 2C, FIG. 2A shows that memory metadata of an FS 1, an FS 2, and an FS 3 is separately backed up in a memory. However, memory metadata of different FSs is not sensed by each other. When fault tolerance check is performed on the memory metadata of the FSs, consistency arbitration is performed only in the FSs on the memory metadata, and fault tolerance check cannot be performed across FSs. In FIG. 2A, it is equivalent to that a triple-modular memory (that is, three copies of metadata are stored for each FS) is directly overlaid on a triple-modular storage (that is, three copies of same data are stored). This causes 3x3 memory overheads.

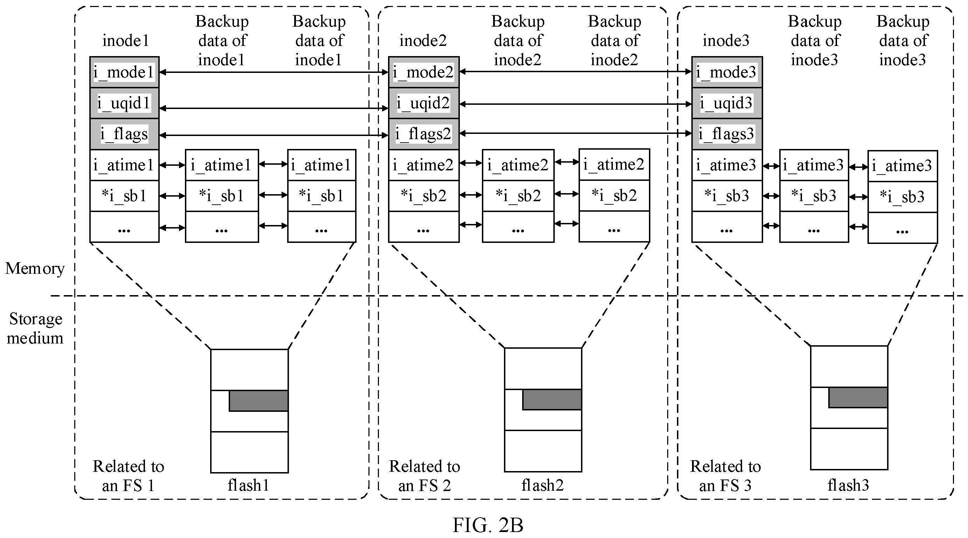

FIG. 2B shows that inconsistent data (for example, i_atime and i_sb) in the memory metadata of the FS 1, the FS 2, and the FS 3 is separately backed up in the memory, and consistent data (for example, i_mode, i_uqid, and i_flags) in the memory metadata of the FS 1, the FS 2, and the FS 3 is no longer backed up. In FIG. 2B, the consistent data in the memory metadata of the FS 1, the FS 2, and the FS 3 is sensed by each other. Therefore, the NMRFS may perform, among different FSs, fault tolerance check on the consistent data in the memory metadata of the FSs in a consistency arbitration manner. In FIG. 2B, the inconsistent data in the memory metadata of the FS 1, the FS 2, and the FS 3 is not sensed by each other. Therefore, for any FS, the NMRFS may perform, in the FS, fault tolerance check on the inconsistent data in the memory metadata of the FS in a consistency arbitration manner.

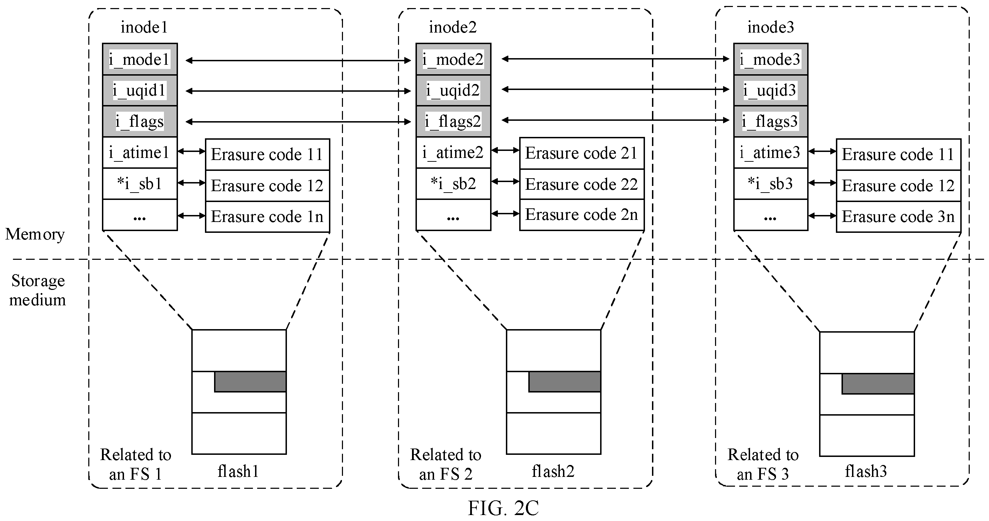

FIG. 2C shows that an erasure code is separately added to the inconsistent data (for example, i_atime and i_sb) in the memory metadata of the FS 1, the FS 2, and the FS 3 in the memory, the inconsistent data is no longer backed up, and the consistent data (for example, i_mode, i_uqid, and i_flags) in the memory metadata of the FS 1, the FS 2, and the FS 3 is not backed up. In FIG. 2C, the consistent data in the memory metadata of the FS 1, the FS 2, and the FS 3 is sensed by each other. Therefore, the NMRFS may perform, among different FSs, fault tolerance check on the consistent data in the memory metadata of the FSs in a consistency arbitration manner. In FIG. 2C, the inconsistent data in the memory metadata of the FS 1, the FS 2, and the FS 3 is not sensed by each other. Therefore, for any FS, the NMRFS may perform, in the FS, fault tolerance check on the inconsistent data in the memory metadata of the FS in an erasure code fault detection manner.

It can be learned from comparison between FIG. 2A, FIG. 2B, and FIG. 2C that the fault tolerance check manner for the memory metadata of the FSs in the memory shown in FIG. 2A needs high memory overheads. In comparison with FIG. 2A, the fault tolerance check manner for the memory metadata of the FSs in the memory shown in FIG. 2B can reduce some memory overheads. In comparison with FIG. 2B, the fault tolerance check manner for the memory metadata of the FSs in the memory shown in FIG. 2C can further reduce some memory overheads.

The foregoing describes the running environment of the OS provided in embodiments of this application. The following describes a data reading/writing process in the running environment of the OS.

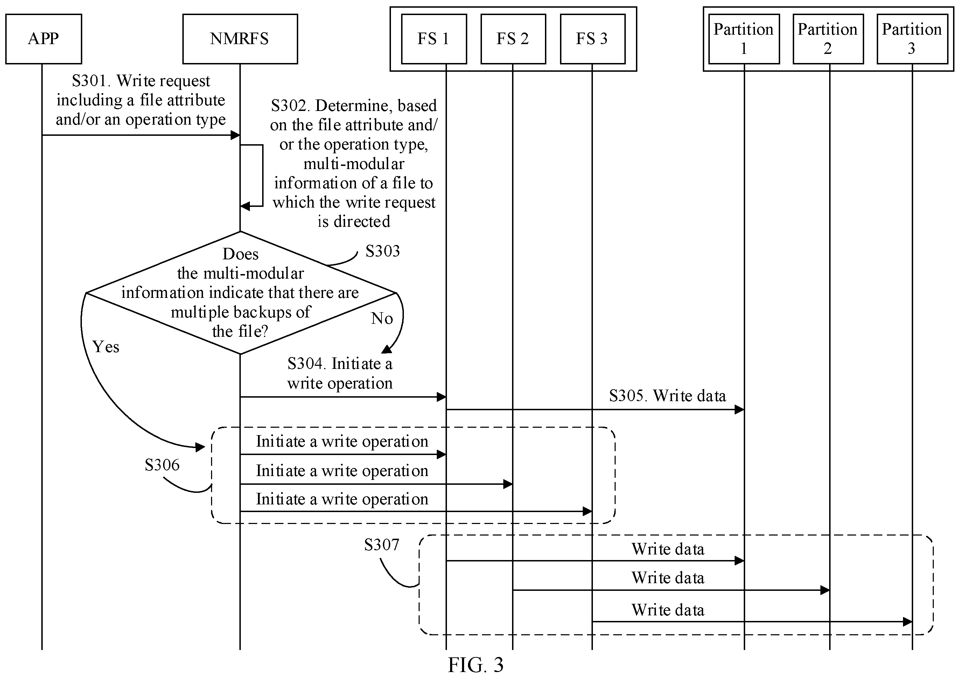

For example, FIG. 3 is a diagram of a data writing process according to an embodiment of this application. As shown in FIG. 3, the data writing process may include the following steps.

S301. An APP sends a write request to an NMRFS. For example, the write request may include a file attribute and/or an operation type of a file to which the write request is directed, and the like. In some embodiments, the APP may send the write request to the NMRFS via, but not limited to, a VFS.

S302. The NMRFS determines, based on the file attribute and/or the operation type included in the write request, multi-modular information of the file to which the write request is directed. The NMRFS may query a preconfigured redundancy range based on the file attribute and/or the operation type included in the write request, to determine whether the file to which the write request is directed needs redundancy backup. When the redundancy backup is needed, the multi-modular information of the file is obtained through querying in metadata of the NMFRS and/or metadata of an FS based on, but not limited to, metadata of the file to which the write request is directed. The multi-modular information may indicate a quantity of backups and a backup file location of the file. When the redundancy backup is not needed, a needed write location of the file to which the write request is directed, that is, the backup file location, may be obtained through querying based on, but not limited to, a file path included in the write request. In this case, the multi-modular information of the file is obtained, that is, the multi-modular information indicates that there is one backup, and the backup file location is a location determined based on the file path. For example, the file attribute may include one or more of a user identifier (user identity, UID), a group identifier (group identity, GID), a process identifier (process identity, PID), a file name, and a file type. For example, a redundancy range may be, but is not limited to, specified by a user. For example, the user may specify that a file whose file name is "foo" has three backups. In some embodiments, the NMRFS may also parse the file path included in the write request, to obtain a directory path and a file name. Then, the NMRFS may view a mount table based on a start point of the directory path, to learn of an FS to which a file corresponding to the file path belongs. When the file belongs to multiple FSs, it indicates that the file needs to be backed up in multiple copies, and the FS to which the file belongs is the backup file location.

S303. The NMRFS determines whether the determined multi-modular information of the file indicates that there are multiple backups of the file. When there are not multiple copies, that is, when there is a single copy, S304 and S305 may be performed; or when there are multiple copies, S306 and S307 may be performed.

S304. When the multi-modular information indicates that there is a single backup of the file, the NMRFS initiates a write operation to an FS associated with the backup file location in the multi-modular information. For example, the write operation initiated by the NMRFS may include to-be-written data content and a data write location. For example, after obtaining the directory path by parsing the file path included in the write request, the NMRFS may view the mount table based on a start point of the directory path, to learn of an FS to which a file corresponding to a file name included in the file path belongs. The mount table may record information about each FS to which the NMRFS is mounted. For ease of description, the following describes a case in which the NMRFS initiates a write operation to an FS 1.

S305. After receiving the write operation initiated by the NMRFS, the FS 1 may write data into a partition 1 to which the FS 1 is mounted, and update memory metadata of the FS 1 in a memory.

S306. The NMRFS separately initiates a write operation to multiple FSs when the multi-modular information indicates that there are multiple backups of the file. In addition, the NMRFS may first perform processing such as erasure coding and encryption on to-be-written data, and then initiate the write operation. In addition, when initiating the write operation, the NMRFS may also optimize a data flushing process in a manner like asynchronous flushing and load balancing. For ease of description, the following describes a case in which the NMRFS separately initiates a write operation to the FS 1, an FS 2, and an FS 3.

S307. After receiving the write operation initiated by the NMRFS, the FS 1 may write, based on a data write location in the write operation, the to-be-written data into the partition 1 to which the FS 1 is mounted, and update memory metadata 1 of the FS 1 in the memory. After receiving the write operation initiated by the NMRFS, an FS 2 may write the data into a partition 2 to which the FS 2 is mounted, and update memory metadata 2 of the FS 2 in the memory. After receiving the write operation initiated by the NMRFS, an FS 3 may write the data into a partition 3 to which the FS 3 is mounted, and update memory metadata 3 of the FS 3 in the memory. For example, when each FS updates the memory metadata of the FS in the memory, for consistent data in the memory metadata, one copy may be stored in the memory, and for inconsistent data in the memory metadata, multiple copies may be stored in the memory, or an erasure code may be added to the inconsistent data, or a combination of the two may be used.

In this way, the data writing process is completed. It should be understood that FIG. 3 is described by using an example in which the running environment of the OS includes three FSs. When the running environment of the OS includes another quantity of FSs, for a data writing process, refer to descriptions in FIG. 3. Details are not described herein again.

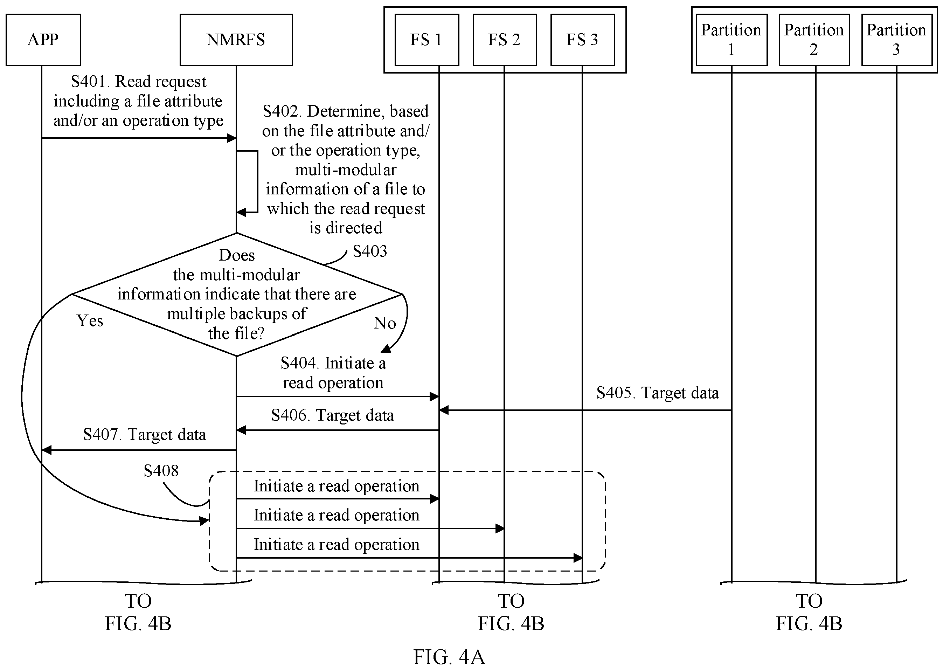

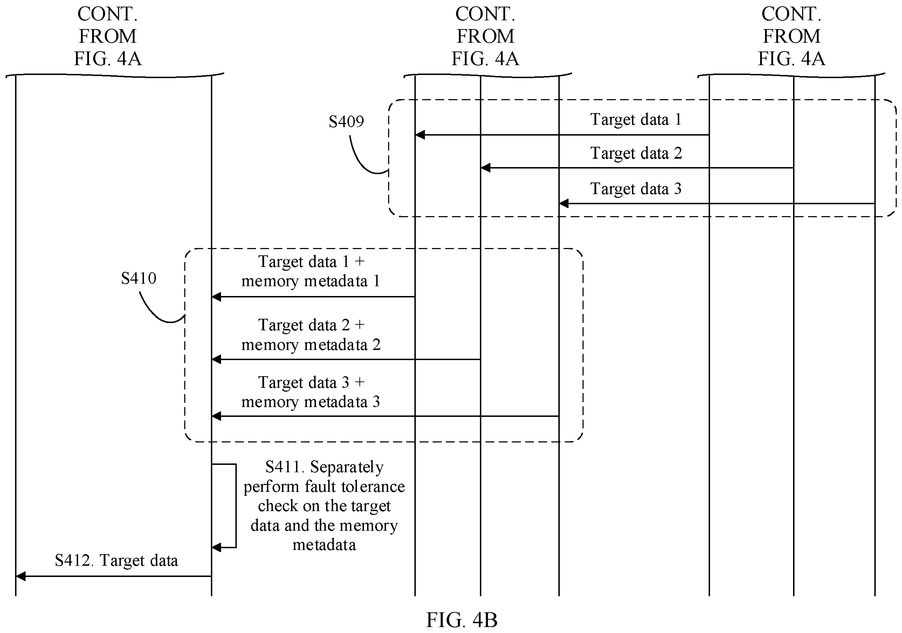

For example, FIG. 4A and FIG. 4B are a diagram of a data reading process according to an embodiment of this application. As shown in FIG. 4A and FIG. 4B, the data reading process may include the following steps.

S401. An APP sends a read request to an NMRFS. For example, the read request may include a file attribute and/or an operation type of a file to which the read request is directed, and the like. In some embodiments, the APP may send the read request to the NMRFS via, but not limited to, a VFS.

S402. The NMRFS determines, based on the file attribute and/or the operation type included in the read request, multi-modular information of the file to which the read request is directed. For this step, refer to the descriptions in S202 in FIG. 2A to FIG. 2C. Details are not described herein again.

S403. The NMRFS determines whether the determined multi-modular information of the file indicates that there are multiple backups of the file. When there are not multiple copies, that is, when there is a single copy, S404 to S407 may be performed, or when there are multiple copies, S408 to S412 may be performed.

S404. When the multi-modular information indicates that there is a single backup of the file, the NMRFS initiates a read operation to one of multiple FSs. For example, the read operation initiated by the NMRFS may include a data read location. For example, after obtaining a directory path by parsing a file path included in the read request, the NMRFS may view a mount table based on a start point of the directory path, to learn of an FS to which a file corresponding to a file name included in the file path belongs. The mount table may record information about each FS to which the NMRFS is mounted. For ease of description, the following describes a case in which the NMRFS initiates a read operation to an FS 1.

S405. After receiving the read operation initiated by the NMRFS, the FS 1 may read, based on the data read location in the read operation, target data from a partition 1 to which the FS 1 is mounted.

S406. The FS 1 transmits the read target data to the NMRFS.

S407. The NMRFS returns the target data to the APP.

S408. The NMRFS separately initiates a read operation to multiple FSs when the multi-modular information indicates that there are multiple backups of the file. For ease of description, the following describes a case in which the NMRFS separately initiates a read operation to the FS 1, an FS 2, and an FS 3.

S409. After receiving the read operation initiated by the NMRFS, the FS 1 may read, based on the data read location in the read operation, target data 1 from the partition 1 to which the FS 1 is mounted, and update memory metadata 1 of the FS 1 in a memory. After receiving the read operation initiated by the NMRFS, the FS 2 may read, based on the data read location in the read operation, target data 2 from a partition 2 to which the FS 2 is mounted, and update memory metadata 2 of the FS 2 in the memory. After receiving the read operation initiated by the NMRFS, the FS 3 may read, based on the data read location in the read operation, target data 3 from a partition 3 to which the FS 3 is mounted, and update memory metadata 3 of the FS 3 in the memory. For example, when each FS updates the memory metadata of the FS in the memory, for consistent data in the memory metadata, one copy may be stored in the memory, and for inconsistent data in the memory metadata, multiple copies may be stored in the memory, or an erasure code may be added to the inconsistent data, or a combination of the two may be used.

S410. The FS 1 sends the target data 1 and the memory metadata 1 of the target data 1 to the NMRFS; the FS 2 sends the target data 2 and the memory metadata 2 of the target data 2 to the NMRFS; and the FS 3 sends the target data 3 and the memory metadata 3 of the target data 3 to the NMRFS. For consistent data in the metadata 1, 2, and 3, Each FS sends one copy to the NMRFS. For inconsistent data in the metadata 1, 2, and 3, the FS 1 may send one copy to the NMRFS and send the erasure code at the same time, the FS 2 may send one copy to the NMRFS and send the erasure code at the same time, and the FS 3 may send one copy to the NMRFS and send the erasure code at the same time. In addition, for the inconsistent data in the metadata 1, 2, and 3, the FS 1 may send multiple copies to the NMRFS, the FS 2 may send multiple copies to the NMRFS, and the FS 3 may send multiple copies to the NMRFS. In addition, for the inconsistent data in the metadata 1, 2, and 3, the FS 1, the FS 2, and the FS 3 may also choose, based on an actual situation, to send the erasure code or the multiple copies of data. This is not limited herein.

S411. The NMRFS separately performs fault tolerance check on the target data and the metadata. The NMRFS may perform consistency arbitration on the target data 1, the target data 2, and the target data 3, and perform consistency arbitration on consistent data in the memory metadata 1, the memory metadata 2, and the memory metadata 3. In addition, the NMRFS may perform erasure code fault detection, consistency arbitration, or the like in each FS on the inconsistent data in the memory metadata of each FS. For details, refer to related descriptions in FIG. 2B and FIG. 2C. Details are not described herein again.

S412. When the fault tolerance check indicates that both the target data and the metadata are correct, the NMRFS returns any one of the target data 1, the target data 2, and the target data 3 to the APP.

In this way, the data reading process is completed.

It can be learned from the foregoing data writing and reading processes that, in the running environment of the OS shown in FIG. 1A and FIG. 1B, the foregoing NMRFS is overlaid on the existing FS to implement fault tolerance for both the file data and the memory metadata of the FS, so that a memory fault and a storage fault can be covered at the same time, and the existing FS does not need to be replaced or intrusively modified. In addition, there is no need to perform redundancy backup on all data in the memory metadata of each FS in the memory managed by the OS. This reduces memory overheads, and implements end-to-end coverage of file storage and memory reliability with minimum overheads.

It should be noted that before data is written and read, the NMRFS needs to be mounted to the FS. The FSs may be first mounted to different partitions of a same storage medium or mounted to different storage media, and then the NMRFS is mounted to the FSs. For example, a mounting process of the FS and/or the NMRFS may be automatically completed by a system, or may be completed by a user by entering a mount command in a form of a configuration file or a command line. In addition, the user may also specify a path, a quantity, a destination location, or the like for an FS to which the NMRFS needs to be mounted in the form of the configuration file or command line. In this way, the user can configure a quantity and locations of data redundancy backups.

Further, after the NMRFS is mounted to the FS, the user may also configure the NMRFS, for example, configure which data needs redundancy backup, a quantity of backups of the data that needs the redundancy backup, and which data needs fault tolerance check. The user may configure the NMRFS in a form of a configuration file or a command line. In this way, the user can flexibly configure different redundancy granularities and fault tolerance behaviors for the file data and the memory metadata of the FS. Certainly, the user may not configure the NMRFS, but use a default configuration of the NMRFS. This may be specifically determined based on an actual situation, and is not limited herein.

It may be understood that the memory metadata of the FS may be read into the memory when the FS is mounted to the OS, or may be read into the memory when the APP opens a file, or may be read into the memory in a file operation process, or may be read into the memory when the NMRFS parses a file path. This may be specifically determined based on an actual situation, and is not limited herein.

The foregoing describes the running environment and the data reading/writing process of the OS provided in embodiments of this application. The following describes, based on the foregoing content, a memory management method provided in embodiments of this application.

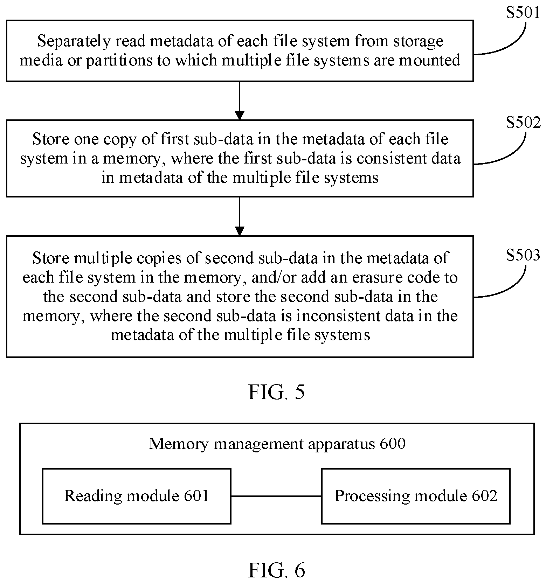

For example, FIG. 5 is a schematic flowchart of a memory management method according to an embodiment of this application. It may be understood that the method may be performed by any apparatus, device, platform, or device cluster having computing and processing capabilities. For example, the memory management method may be applied to an operating system in which multiple file systems are mounted, and the multiple file systems may be mounted to different partitions of a same storage medium or mounted to different storage media. As shown in FIG. 5, the memory management method may include the following steps.

S501. Separately read metadata of each file system from the storage media or partitions to which the multiple file systems are mounted.

In this embodiment, when a file system is mounted to an operating system, and an APP opens a file in a file system, or a file in a file system is operated, metadata of the file system may be read from a storage medium or partition to which the file system is mounted.

S502. Store one copy of first sub-data in the metadata of each file system in a memory, where the first sub-data is consistent data in metadata of the multiple file systems.

In this embodiment, after metadata of a file system is read, one copy of first sub-data in the metadata of the file system may be stored in the memory. The first sub-data is consistent data in the metadata of the multiple file systems, for example, a file name, an access permission, or a group identifier. In this way, in the memory, one copy of the consistent data in the metadata of each file system is stored.

S503. Store multiple copies of second sub-data in the metadata of each file system in the memory, and/or add an erasure code to the second sub-data and store the second sub-data in the memory, where the second sub-data is inconsistent data in the metadata of multiple file systems.

In this embodiment, after metadata of a file system is read, multiple copies of second sub-data in the metadata of the file system may be stored in the memory, or one copy of the second sub-data may be stored in the memory, and an erasure code is added to the second sub-data. The second sub-data is inconsistent data in the metadata of the multiple file systems, for example, a timestamp and/or a superblock pointer.

In this way, in a subsequent file reading process, the target file may be read from the multiple file systems, and the metadata of the multiple file systems may be separately read from the memory. Then, fault tolerance check is performed on the read target file in a consistency arbitration manner, fault tolerance check is performed on the read first sub-data in a consistency arbitration manner, and for any file system in the multiple file systems, fault tolerance check is performed on the read second sub-data of the any file system in a consistency arbitration manner or an erasure code fault detection manner. In this way, both a memory fault and a storage fault are covered, and memory overheads are reduced.

It may be understood that sequence numbers of the steps in the foregoing embodiments do not mean an execution order, and the execution order of the processes should be determined based on functions and internal logic of the processes, and should not constitute any limitation on the implementation process of embodiments of this application. In addition, the foregoing described embodiments may be combined based on an actual situation, and a combined solution still falls within the protection scope of this application.

Based on the content in the foregoing embodiments, an embodiment of this application provides a memory management apparatus.

For example, FIG. 6 is a diagram of a structure of a memory management apparatus. The memory management apparatus may be deployed in an operating system to which multiple file systems are mounted. In addition, different file systems are mounted to different partitions of a same storage medium or mounted to different storage media, and different file systems back up each other. As shown in FIG. 6, the memory management apparatus 600 may include a reading module 601 and a processing module 602. The reading module 601 is configured to read metadata of each file system from the storage media or partitions to which the multiple file systems are mounted. The processing module 602 is configured to: store one copy of first sub-data in the metadata of each file system in a memory, where the first sub-data is consistent data in metadata of the multiple file systems; and store multiple copies of second sub-data in the metadata of each file system in the memory, and/or add an erasure code to the second sub-data and store the second sub-data in the memory, where the second sub-data is inconsistent data in the metadata of the multiple file systems.

In some embodiments, the reading module 601 is further configured to: in response to an obtained file read operation, separately read a target file from each file system, and separately read the metadata of each file system from the memory. The processing module 602 is further configured to: perform fault tolerance check on the read target file in a consistency arbitration manner; and perform fault tolerance check on the read first sub-data in a consistency arbitration manner, and perform, for any file system in the multiple file systems, fault tolerance check on second sub-data of the any file system in a consistency arbitration manner or an erasure code fault detection manner.

In some embodiments, the first sub-data includes one or more of a file name, an access permission, and a group identifier; and the second sub-data includes a timestamp and/or a superblock pointer.

It should be understood that the foregoing apparatus is configured to perform the method in the foregoing embodiment. Implementation principles and technical effect of corresponding program modules in the apparatus are similar to those described in the foregoing method. For a working process of the apparatus, refer to the corresponding process in the foregoing method. Details are not described herein again.

An embodiment of this application further provides a compute device. The compute device may include a memory, a processor, and a computer program that is stored in the memory and that can be run on the processor. A file system including at least the foregoing described FS and NMRFS is deployed on the processor. When executing the computer program, the processor implements running of the file system.

An embodiment of this application further provides another compute device. The compute device may include one or more processors; and a memory, configured to store one or more programs, where when the one or more programs are executed by the one or more processors, the one or more processors are enabled to implement the method in the foregoing embodiment.

Based on the method in the foregoing embodiments, an embodiment of this application provides a computer-readable storage medium, including computer program instructions. When the computer program instructions are executed by a compute device, the compute device performs the method in the foregoing embodiment. For example, the computer-readable storage medium may be any usable medium that can be stored by a compute device, or a data storage device, for example, a data center, including one or more usable media. The usable medium may be a magnetic medium (for example, a floppy disk, a hard disk, or a magnetic tape), an optical medium (for example, a DVD), a semiconductor medium (for example, a solid state disk), or the like.

Based on the method in the foregoing embodiments, an embodiment of this application provides a computer program product including instructions. When the instructions are run by a compute device, the compute device is enabled to perform the method in the foregoing embodiment.

It can be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, any regular processor, or the like.

The method steps in embodiments of this application may be implemented in a hardware manner, or may be implemented in a manner of executing software instructions by the processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be disposed in an ASIC.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instruction may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

It may be understood that various numbers in embodiments of this application are merely used for differentiation for ease of description, and are not used to limit the scope of embodiments of this application.

Finally, it should be noted that the foregoing embodiments are merely intended for describing the technical solutions of this application but not for limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the protection scope of the technical solutions in embodiments of this application.

## Claims

1. A file system, comprising:
multiple first file systems, wherein the multiple first file systems are mounted to different partitions of a same storage medium or mounted to different storage media; and
a second file system, mounted to the multiple first file systems, and configured to perform, among the multiple first file systems, fault tolerance check on consistent data in memory metadata of the multiple first file systems.

2. The file system according to claim 1, wherein the second file system is further configured to perform fault tolerance check on file data of the multiple first file systems.

3. The file system according to claim 1 or 2, wherein the second file system is further configured to separately perform, in each of the first file systems, fault tolerance check on inconsistent data in the memory metadata of the multiple first file systems.

4. The file system according to any one of claims 1 to 3, further comprising:
a virtual file system, wherein the virtual file system is mounted to the second file system.

5. The file system according to any one of claims 1 to 4, wherein one copy of consistent data in memory metadata of one of the first file systems is stored in a memory; and
multiple copies of inconsistent data in memory metadata of one of the first file systems are stored in the memory.

6. The file system according to any one of claims 1 to 5, wherein one copy of consistent data in memory metadata of one of the first file systems is stored in the memory; and
one copy of inconsistent data in memory metadata of one of the first file systems is stored in the memory, and an erasure code is added to each copy of inconsistent data.

7. The file system according to any one of claims 1 to 6, wherein one copy of consistent data in memory metadata of one of the first file systems is stored in the memory; and
one copy of first sub-data comprised in inconsistent data in memory metadata of one of the first file systems is stored in the memory, an erasure code is added to the first sub-data, and multiple copies of second sub-data comprised in the inconsistent data are stored in the memory.

8. The file system according to any one of claims 1 to 7, wherein the consistent data in the memory metadata comprises one or more of a file name, an access permission, and a group identifier; and
the inconsistent data in the memory metadata comprises a timestamp and/or a superblock pointer.

9. The file system according to any one of claims 1 to 8, wherein a mounting relationship between the first file system and the second file system is specified by a user.

10. The file system according to any one of claims 1 to 9, wherein a quantity of the first file systems is specified by the user.

11. The file system according to any one of claims 1 to 10, wherein both the consistent data and the inconsistent data in the memory metadata of the first file system are specified by the user.

12. The file system according to any one of claims 1 to 11, wherein the second file system is further configured to:
determine, based on a file attribute and/or an operation type comprised in a read/write request, multi-modular information of a target file to which the read/write request is directed, wherein the multi-modular information indicates a quantity of backups and a backup file location of the target file; and search the multi-modular information based on the metadata of the file; and
when the multi-modular information indicates that there are multiple backups of the target file, initiate a read/write operation to a first file system to which each backup file location belongs; or
when the multi-modular information indicates that there is a single backup of the target file, initiate a read/write operation to a first file system to which the backup file location belongs.

13. The file system of claim 12, wherein the file attribute comprises one or more of a user identifier, a group identifier, a process identifier, a file name, and a file type.

14. An operating system, mounted with the file system according to any one of claims 1 to 13.

15. A compute device, comprising a memory, a processor, and a computer program that is stored in the memory and that can be run on the processor, wherein the file system according to any one of claims 1 to 13 is deployed on the processor, and when executing the computer program, the processor implements running of the file system.

16. A memory management method, applied to an operating system to which multiple file systems are mounted, wherein the multiple file systems are mounted to different partitions of a same storage medium or mounted to different storage media; and
the method comprises:
separately reading metadata of each of the file systems from the storage media or partitions to which the multiple file systems are mounted;
storing one copy of first sub-data in the metadata of each of the file systems in a memory, wherein the first sub-data is consistent data in metadata of the multiple file systems; and
storing multiple copies of second sub-data in the metadata of each of the file systems in the memory, and/or adding an erasure code to the second sub-data and storing the second sub-data in the memory, wherein the second sub-data is inconsistent data in the metadata of the multiple file systems.

17. The method according to claim 16, wherein the method further comprises:
in response to an obtained file read operation, separately reading a target file from at least two file systems in the multiple file systems, and separately reading metadata of the at least two file systems from the memory;
performing fault tolerance check on the read target file in a consistency arbitration manner;
and
performing fault tolerance check on the read first sub-data in a consistency arbitration manner, and performing, for any file system in the at least two file systems, fault tolerance check on the read second sub-data of the any file system in a consistency arbitration manner or an erasure code fault detection manner.

18. The method according to claim 16 or 17, wherein the first sub-data comprises one or more of a file name, an access permission, and a group identifier; and
the second sub-data comprises a timestamp and/or a superblock pointer.

19. A memory management apparatus, deployed in an operating system to which multiple file systems are mounted, wherein the multiple file systems are mounted to different partitions of a same storage medium or mounted to different storage media; and
the apparatus comprises:
a reading module, configured to read metadata of each of the file systems from the storage media or partitions to which the multiple file systems are mounted; and
a processing module, configured to store one copy of first sub-data in the metadata of each of the file systems in a memory, wherein the first sub-data is consistent data in metadata of the multiple file systems, wherein
the processing module is further configured to store multiple copies of second sub-data in the metadata of each of the file systems in the memory, and/or add an erasure code to the second sub-data and store the second sub-data in the memory, wherein the second sub-data is inconsistent data in the metadata of the multiple file systems.

20. The apparatus according to claim 19, wherein the reading module is further configured to: in response to an obtained file read operation, separately read a target file from at least two file systems in the multiple file systems, and separately read metadata of the at least two file systems from the memory; and
the processing module is further configured to perform fault tolerance check on the read target file in a consistency arbitration manner; and perform fault tolerance check on the read first sub-data in a consistency arbitration manner, and perform, for any file system in the multiple file systems, fault tolerance check on the read second sub-data of the any file system in a consistency arbitration manner or an erasure code fault detection manner.

21. The apparatus according to claim 19 or 20, wherein the first sub-data comprises one or more of a file name, an access permission, and a group identifier; and
the second sub-data comprises a timestamp and/or a superblock pointer.

22. A compute device, comprising:
one or more processors; and
a memory, configured to store one or more programs, wherein
when the one or more programs are executed by the one or more processors, the one or more processors are enabled to implement the method according to any one of claims 16 to 18.

23. A computer-readable storage medium, comprising computer program instructions, wherein when the instructions are run by a compute device, the compute device is enabled to perform the method according to any one of claims 16 to 18.

24. A computer program product comprising instructions, wherein when the instructions are run by a compute device, the compute device is enabled to perform the method according to any one of claims 16 to 18.
